# EUROPEAN PATENT SPECIFICATION

(11) **EP 1 108 098 B1**
(45) Date of publication and mention of the grant of the patent: **14.06.2006**
(21) Application number: 99944164.5
(22) Date of filing: 27.08.1999
(51) Int. Cl.: E04F 13/06, F21V 21/04, F21V 19/00, E04F 19/02, F16L 5/10

(54) **APERTURE EDGING MEMBER AND METHOD**
RANDELEMENT FÜR ÖFFNUNGEN UND VERFAHREN FÜR DAS ANBRINGEN DES RANDELEMENTES
ELEMENT ET PROCEDE DE BORDAGE D'OUVERTURES

(30) Priority: 28.08.1998 AU PP551998; 04.08.1999 AU PP203099
(43) Date of publication of application: 20.06.2001
(73) Proprietor: Burgess, John David Tilbury, Bondi, NSW 2026 (AU)
(72) Inventor: Burgess, John David Tilbury, Bondi, NSW 2026 (AU)
(74) Representative: Luderschmidt, Schüler & Partner GbR
(86) International application number: PCT/AU1999/000696
(87) International publication number: WO 2000/012840

(56) References cited:
- WO-A-97/25570
- AU-A- 1 637 188
- DE-U- 8 810 264
- FR-A- 2 746 460
- GB-A- 2 022 180
- NL-A- 8 201 576
- US-A- 2 218 731
- US-A- 3 064 984
- US-A- 3 327 984
- US-A- 3 620 401
- US-A- 3 721 817
- US-A- 3 794 962
- US-A- 4 026 082
- US-A- 4 729 074
- US-A- 4 862 332
- US-A- 5 379 972

## Description

### Technics Field of the Invention

The present invention relates to improvements in the provision of apertures in building board materials, such as in ceilings and/or walls.

The present invention relates to a method and apparatus for forming a substantially smooth aperture within a ceiling or wall or other surface member, and also to an apparatus and method for installing a fitting, such as a light fitting, in a manner such that it does not overlay or protrude from said surface member.

### Description of the Prior Art

Presently known methods of installing a fitting, such as a light fitting, air conditioning duct, sprinkler, or other fitting in a ceiling, involve forming a cutout in the ceiling, and then supplying the fitting within the cutout. Such known fittings are provided with a flange or the like fabricated by the manufacturer of the fitting, such that, when installed any roughened edge about the cutout is covered by the protruding flange overlying the ceiling surface.

Such a flange may discolour, rust, or begin to separate from the "line", i.e., the smooth surface, of the ceiling, over time. Furthermore, such a flange also causes a visual disruption to the smooth surface of the ceiling. Not only is this aesthetically unappealing, but, where it is necessary to paint or provide some form of coating to the surface, either the fitting and/or its associated flange must be removed, or, difficulty is encountered avoiding application of the paint or other coating to the flange portion, at least, of the fitting.

Various methods and apparatus are presently known for fanning an orifice in a surface, member, some of which relate to installing a light fitting. Examples of such known methods and apparatus are shown in the following documents: US-A-3 327 984, US-A-2 218 731, US-A-4 852 332, DE 88 10 264 U, US-A-3 620 401, NL-A-8 201 576, US-A-3 064 984, FR-A-2 746 460, US-A-4 729 074, US-A-3 721 817, US-A-3 794 962, US-A-5 379 972, US-A-4 026 082, GB-A-2 022 180, WO 97 25570 A and AU 16371 88 A. None of the prior art shows a unitary aperture edging member having the construction of the device of the present invention.

### Summary of the Invention

The present invention seeks to provide an apparatus and method for forming a substantially smooth aperture within a surface member, such as a ceiling or a wall, which overcomes the disadvantages of the prior art.

The present invention also seeks to provide an apparatus and method for forming a substantially smooth aperture within the surface member for attaching a fitting thereto but, which allows for elimination of a flange or the like overlaying the surface member.

The present invention also seeks to provide a means for installing a fitting, such as a light fitting, in a ceiling in a manner such that no visual disruption is provided to the line of the ceiling, which has the added advantage that less difficulty is encountered in painting or applying other coatings to the surface member, etc, and, in which the structural rigidity of the aperture is improved.

The present invention also seeks to provide a support member for a light fitting, which is adapted to receive a range of commercially available downlight type light fittings, or which may receive a custom designed fitting in accordance with the present invention.

In one broad form, the present invention provides an aperture edging member for forming a substantially smooth aperture within a surface member, characterised in that said member being formed as a unitary member of complementary shape to surround the entire periphery of an orifice formed in said surface member, the aperture edging member including:
a substantially planar rim portion which is perforated, segmented, castellated or the like, and, which is adapted to be attached over a portion of said surface member about said orifice formed in said surface member;
a lip extending outwards from an inner edge of said rim such that, following installation, a layer of settable material is adapted to be applied over said rim portion to the extremity of said lip to form a surface finish over said rim which is of substantially flush appearance to the remainder of the surface member not covered by said rim; and,
a flange depending substantially orthogonally from the outer extremity of said lip so as to fit within said orifice and thereby define an inner surface of said aperture which extends substantially orthogonally to said surface finish.

Preferably, said rim is shaped to fit within an orifice of any selected shape.

Also preferably, said rim is substantially annularly shaped so as to fit within a substantially circular orifice.

Preferably, said surface member is formed of plasterboard, plaster, render or the like, and said settable material includes plaster, render or other settable filler material.

In a further broad form, the present invention seeks to provide a support member for supporting a fitting in an orifice provided within a surface member, characterised in that said member being formed as a unitary member of complementary shape to surround the entire periphery of an orifice formed in said surface member, the support member including:
a substantially planar rim portion which is perforated, segmented, castellated, or the like, and, which is adapted to be attached over a portion of said surface member about said orifice-formed in said surface member;
a lip extending outwards from an inner edge of said rim such that, following installation, a layer of settable material is applied over said rim portion to the extremity of said lip to form a surface finish over said rim which is of substantially flush appearance to the remainder of the surface member not covered by said rim; and,
a flange depending substantially orthogonally from the outer extremity of said lip so as to fit within said orifice, and thereby define an inner surface of said aperture which extends substantially orthogonally to said surface finish, said flange incorporating means for attachment of said fitting.

In this preferred form of the invention, said rim is shaped to fit within an orifice of any desired shape.

Also preferably, said rim is substantially annularly shaped to fit within a substantially circularly shaped orifice.

Preferably, said surface member is a plasterboard, plaster or rendered surface.

Also preferably, said settable material includes plaster, render or other filler material.

Preferably, said fitting is a light fitting, such as a downlight fitting.

Most preferably, said fitting is an air conditioning or heating or other vent, a speaker, a sprinkler, or any other fitting normally attached to a ceiling or wall surface,

In a preferred embodiment, said support member is formed of sheet metal material.

Also preferably, said support member is formed of plastics material.

In yet a further broad form, the present invention provides a lighting device adapted to be provided within an orifice of a surface member, including a support member formed as a unitary member of complementary shape to surround the entire periphery of an orifice formed in said surface member, said support member including:
a substantially planar rim portion adapted to be attached over a portion said surface member about said orifice formed in said surface member, the rim portion being perforated, segmented, castellated or the like;
a lip extending outwards from an inner edge of said rim, such that, following installation, a layer of settable material is provided over said rim to the extremity of said lip to form a surface finish over said rim which is of substantially flush appearance to the remainder of the surface member not covered by said rim portion;
a flange depending substantially orthogonally from said lip so as to fit substantially within said orifice and thereby define an inner surface of said aperture which extends substantially orthogonally to said surface finish; and,
said lighting device also including lamp means adapted to be releasably attached to attachment means associated with said flange of said support member in a manner such that said lamp is either substantially flush with or recessed within said aperture relative to said surface member.

In this preferred form, said light fitting includes a lamp housing including a flange having a central aperture to receive said lamp means, wherein said lamp housing is provided with engagement means to engage with said attachment means of said support member.

In yet a further broad form, the present invention provides a method of forming an aperture in a surface member, including the steps of:
cutting an orifice in said surface member;
inserting and attaching acontinuously formed aperture edging member within said orifice, said aperture edging member includes:
   a substantially planar rim portion which is perforated, segmented, castellated or the like, and, which is adapted to be attached over a portion of said surface member about said orifice formed in said surface member;
   a lip extending outwards from an inner edge of said rim, such that, following installation, a layer of settable material is adapted to be applied over said rim portion to the extremity of said lip to form a surface finish over said rim which is of substantially flush appearance to the remainder of the surface member not covered by said rim; and,
   a flange depending substantially orthogonally from the outer extremity of said lip so as to fit within said orifice and thereby define an inner surface of said aperture which extends substantially orthogonally to said surface finish; and,
   applying a layer of settable material over said rim portion to said lip.

Preferably, said orifice is formed of any desired shape, and wherein an aperture edging member of corresponding shape is inserted within said orifice.

Also preferably, said orifice is of substantially circular shape, and wherein an aperture edging member of substantially annular shape is provided within said orifice.

Preferably, said surface member is plasterboard, plaster or a rendered surface, and wherein said settable material includes plaster, render or other filler material.

In yet a further broad form, the present invention provides a method of installing a recessed fitting in a surface member, including the steps of:
cutting an orifice in said surface member;
inserting and attaching a support member in said orifice, said support member characterised in that it is formed as a unitary member of complementary shape to surround the entire periphery of an orifice formed in said surface member,the support member including:
   a substantially planar rim portion which is perforated, segmented, castellated, or the like, and, which is adapted to be attached over a portion of said surface member about said orifice formed in said surface member;
   a lip extending outwards from an inner edge of said rim, such that, following installation, a layer of settable material is applied over said rim portion to the extremity of said lip to form a surface finish over said rim which is of substantially flush appearance to the remainder of the surface member not covered by said rim; and,
   a flange depending substantially orthogonally from the outer extremity of said lip so as to fit within said orifice and thereby define an inner surface of said aperture which extends substantially orthogonally to said surface finish, said flange incorporating means for attachment of said fitting;
   providing a layer of settable material over said rim to said lip; and,
   attaching said fitting to said attachment means of said flange.

Preferably, said orifice is formed of any desired shape, and wherein an aperture edging member of corresponding shape is inserted within said orifice.

Also preferably, said orifice is of substantially circular shape, and wherein an aperture edging member having a rim of substantially annular shape is provided within said orifice.

In a preferred embodiment, said surface member is plasterboard, plaster or a rendered surface, and wherein said settable material includes plaster, render or other fillable material.

Preferably, characterised in that said fitting is a light fitting.

Also preferably, characterised in that said fitting is an air conditioning, heating or other vent, a speaker, a sprinkler, or any other fitting normally installed in a ceiling or wall surface.

### Brief Description of the Drawings

The present invention will become more fully understood from the following detailed description of a preferred but non-limiting embodiment, described in connection with the accompanying drawings, wherein:
Fig. 1 illustrates a perspective view of a support member for supporting a light fitting, in accordance with a preferred but non-limiting embodiment of the present invention;
Fig. 2 illustrates a plan view of the support member of Fig. 1;
Fig. 3 illustrates a cross-sectional view through the support member shown in Fig. 2, showing the positioning of a light fitting therein,
Fig. 4 illustrates an enlarged cross-sectional view of the profile of the support member of Fig. 1;
Fig. 5 illustrates a plan view of an alternative embodiment of the invention;
Fig. 6 illustrates a cross-sectional view of the embodiment of Fig. 5; and,
Fig. 7 illustrates an alternative embodiment of the invention, showing a support member having an alternative support structure associated therewith.

### Detailed Description of Preferred Embodiments

Throughout the drawings, like numerals will be used to identify similar features, except where expressly otherwise indicated.

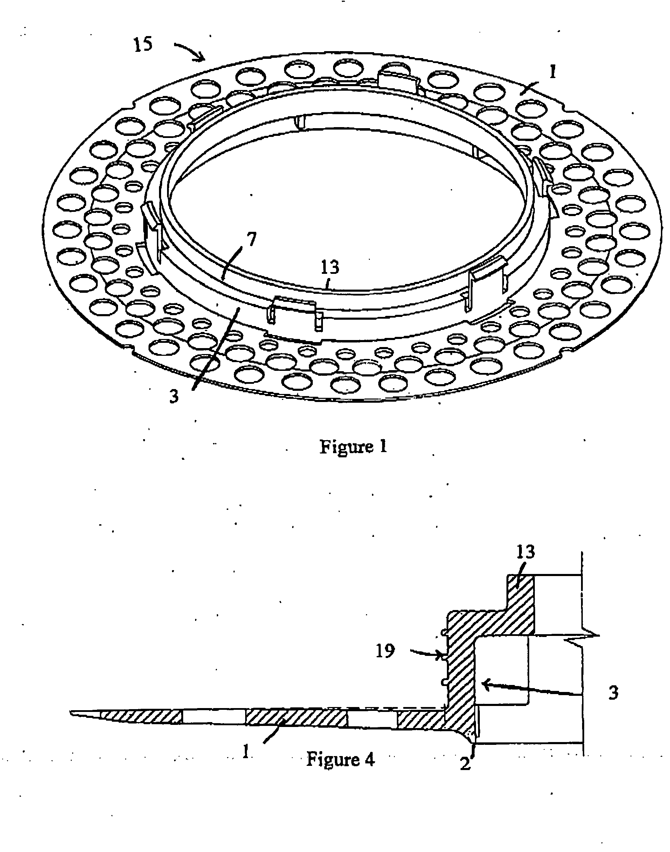

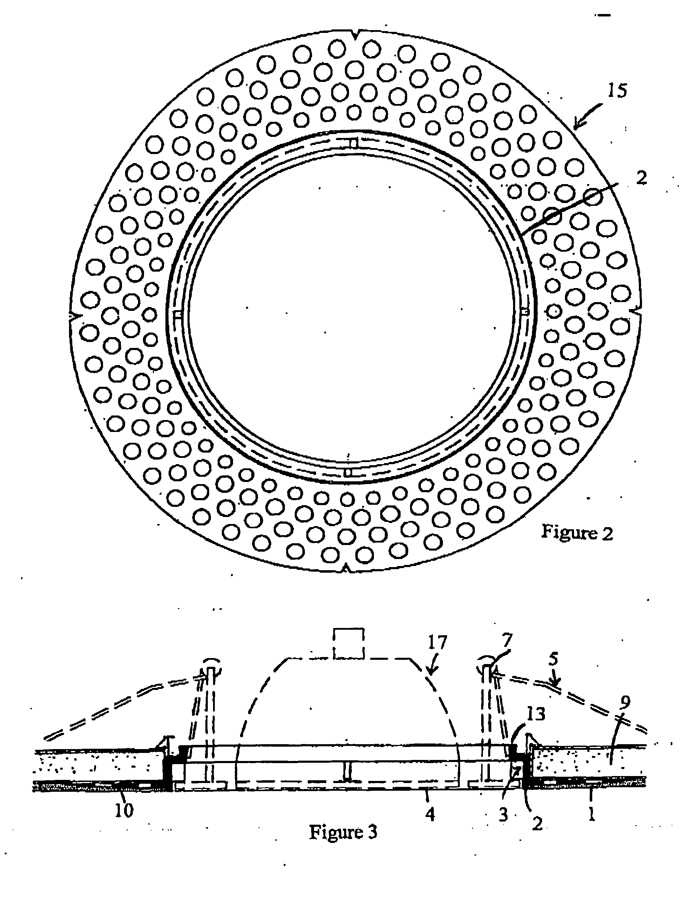

As illustrated in the Figs. 1 to 7 of the drawings, a support member 15 for supporting a light fitting or other fitting to a cutout in a surface member is shown, which includes a substantially planar rim portion 1, a lip 2 provided along one edge of the rim 1, and a flange 3, depending from the lip in a substantially orthogonal direction to the plane of rim 1.

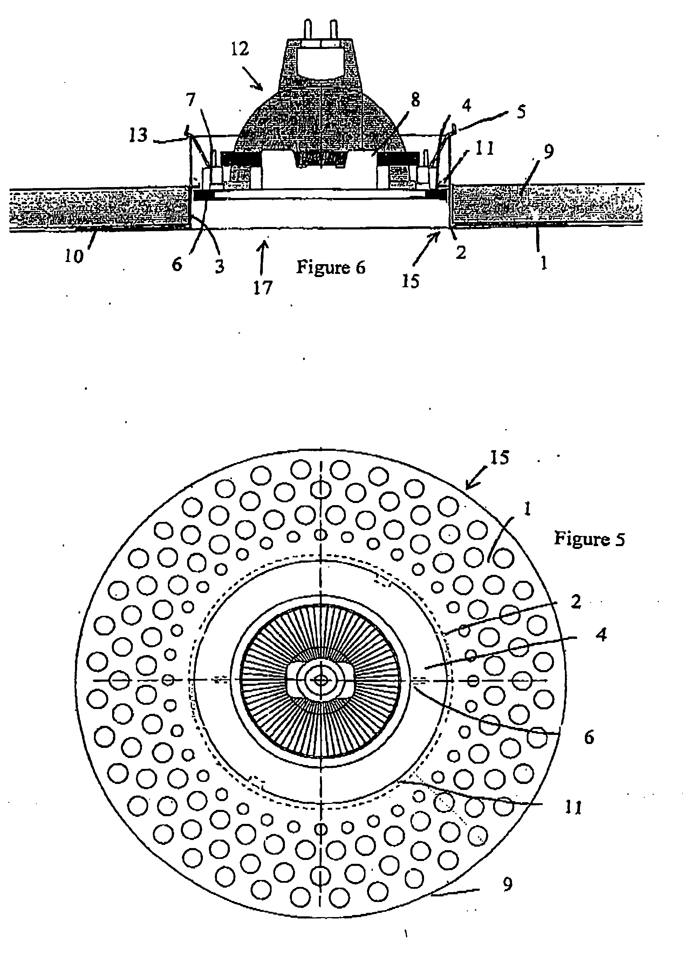

A light fitting 17 may be installed within the support member 15, and be retained therein by suitable attachment means. The arrangement illustrated in the drawings includes an attachment means, which is embodied in the drawings as a flange 7. The light fitting may be in the form of a conventional type downlight as presently commercially available, or may be custom designed to particularly suit the support member. In the embodiment shown, a conventional downlight is shown, including a housing 4 which is typically made of cast aluminium, which may be polished and sealed or painted, with a central aperture to suit the lamp 12. To retain the lamp 12 and lamp housing 4 within the support member 15, spring clips 5, held in place by cleats 7, may be provided which catch over the top edge 13 of flange 3. The cleats 7 may be fixed to the inner face of the lamp housing. It will be appreciated by persons skilled in the art that any alternative form of attachment means for retaining the lamp 12 within a support member, may be utilised. For example, a cleat and spring circlip 8 may be utilised to retain the lamp 12 in position, in conjunction with cleats 7, such as in the arrangement of Fig. 6. The upper end of flange 3 may be inwardly bent, as indicated by protrusion 11. against which the edge 4 of the light fitting 12 may abut.

It will be understood that a unique feature of this aspect of the present invention is the ability to provide a "smooth" finished surface 10 right up to the lip 2 of the device 15. When the term "smooth" is used in this context throughout the specification, it should be understood that what is intended in that there is no visually noticable protruding flange or the like required to be provided overlaying the surface 10, Consequently, a continuous paintable finish right up to the light fitting aperture is provided, resulting in a smooth flush fitting, or a recessed fitting, but with no visual disruption to the line of the ceiling.

The rim 1 may be attached to the surface member 9, by inbuilt fastening clips, or like means, or, by using adhesives, screws, nails or any other conventional means. Appropriate roughening or projections 19 may be optionally provided on any of the surfaces of the support member to assist in bending or for improved strength or rigidity. The rim 1 is preferably perforated in a similar manner to the way in which corner edging pieces are perforated when forming corners on plasterboard walls. Alternatively, the rim may be segmented, castellated, or the like. The other components may likewise be perforated, segmented, castellated, or the like. The rim 1 is therefore attached to the surface member 9, and then settable material 10, such as plaster, or other filler material, is supplied over the surface member 9 right up to the lip 2.

It will be appreciated that a fitting of any desired shape may be installed into a member of appropriate complementary shape. This may include conventional type circular downlights, whereby the rim would typically be of substantially annular shape, or, any other shape may be provided. This may embody the ability to mould the support member in a variety of shapes depending upon the fitting to be installed. Lights of any desired shape such as rectangular, square, oval, triangle, or any other freeform shape, may therefore be installed, including uniquely shaped designs such as corporate logos, etc,

Whilst the present invention is particularly useful for providing apertures in plasterboard ceilings, it will be appreciated that the invention may alternatively be applied to walls or other surface members. Furthermore, it will be appreciated that such fittings may be applied to rendered surfaces, or any other surface which might typically utilise a settable material, such as a plaster, render, or other filler material.

The support member 15 may be formed of sheet metal material, plaster, plastics, cardboard or any other suitable material. It will be appreciated that whilst sheet metal material might have the advantage of providing higher structural rigidity, when forming unusual shapes, plastics, plaster, or resin impregnated cardboard may be more preferable in being more easily formed to be of any desired shape. Other materials will become understood to be able to be used, by persons skilled in the art.

Whilst the embodiment hereinbefore described is related to a support member for supporting a fitting in a cutout provided within a surface member, it will be appreciated that an alternative embodiment of the invention would be wherein an aperture is desired to be formed within a surface member, wherein the aperture is desired to provide such a smooth (flush) uninterrupted surface, right up to the edge of the aperture, but wherein no fitting is actually desired to be installed. As such, the present invention should be understood to also incorporate such an aperture edging member, for forming such a smooth aperture within the surface member, which incorporates the substantially planar rim adapted to be attached to the surface member, the lip 3 provided about the edge of the rim, and which has a flange 3 depending from the lip in a substantially orthogonal or other transverse direction to the rim, so as to fit within the aperture. It will be appreciated that it may be desirable to provide such apertures simply for aesthetic reasons, or for other purposes. It will also be understood that whilst the embodiment illustrated in the drawings provides the flange 3 to be substantially orthogonal to the rim member 1, that other transverse angles other than orthogonal may also be provided depending upon the particular aperture and/or fitting desired to be installed.

It will be understood by persons skilled in the art that the method of forming the aperture and/or installing the recessed fitting in the surface member includes the primary step of forming a cutout in the surface member, then installing and attaching an aperture member or support member within the cutout, wherein the aperture member includes the substantially planar rim portion 1, the lip 2, and the flange 3, in such a manner whereby the rim portion is attached to the surface member about the cutout, such that the flange fits within the cutout. Thereafter, a layer of settable material is provided over the rim to the lip, and, in the instance where a recessed fitting, such as a light fitting, is adapted to be installed, the fitting is then attached by suitable attachment means to the flange 3.

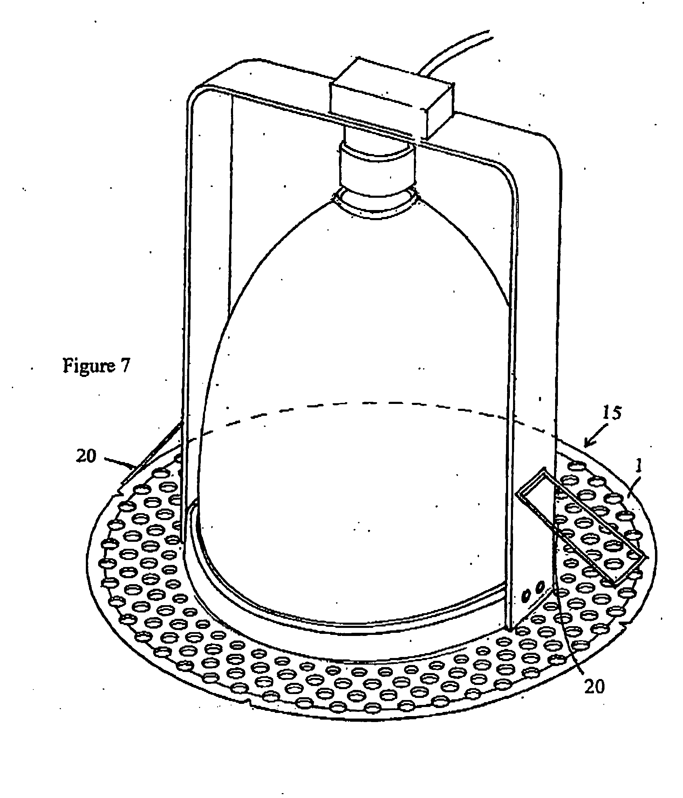

A variation to the invention is to incorporate an inbuilt support structure associated with the flange 1, in the manner illustrated in Fig. 7, Rather than attaching a commercially available down light or recessed light using a spring clip 5, a custom built light fitting may be designed. In such an arrangement, the fitting 15 may be supported by support clips 20, particularly whilst the plaster or other material is setting,

Various alterations and modifications to the embodiments hereinbefore described will become apparent to persons skilled in the art. For example, a fire-rated downlight construction, wherein a totally enclosed housing surrounds the light fitting, with an appropriate orifice for wires to pass through, is envisaged. Such a housing may be formed of the same type of material as the ceiling, for example, fire-rated plasterboard or metal, and be attachable atop the plasterboard ceiling using the support member arrangement of the present invention.

It will be appreciated that this first aspect of the present invention therefore provides an apparatus and method which is particularly useful in providing a unique means and method of illuminating in providing a smooth surface profile, which is readily incorporated into ceilings and/or walls, using conventional building techniques. The fittings described in the present invention allow the surface plane and the colour to be broken only by the aperture for such a light source.

It will be appreciated that the aperture edging device of the present invention uniquely provides a device which forms a smooth edge on an aperture in a boarding material, such as plasterboard, or the like. The device provides protection against the destruction or decay of the edge of the plasterboard or like material, and optionally also provides the ability to then install a light fitting or the like about the edge of the device, whereby the edge of the device is provided with improved structural integrity. Once a rigid and vertical face has been formed in the building board the methods of fixing fixtures may be changed. This system provides the introduction of threads, keys or similar male/female components to the fixture and aperture trim. These systems of restraint allow for more rapid installation and removal of fixtures of fixtures without damaging the board into which they are housed.

The present invention has been hereinbefore described with reference to a particular embodiment only. It will, however, be understood by persons skilled in the art, that numerous variations and modifications can be made to the invention. All such variations and modifications should be considered to be within the scope of the appended claims.

## Claims

1. An aperture edging member (15) for forming a substantially smooth aperture within a surface member (9), **characterised in that** said member (15) being formed as a unitary member of complementary shape to surround the entire periphery of an orifice formed in said surface member (9), the aperture edging member (15) including:
a substantially planar rim portion (1) which is perforated, segmented, castellated or the like, and, which is adapted to be attached over a portion of said surface member (9) about said orifice formed in said surface member;
a lip (2) extending outwards from an inner edge of said rim (1) such that, following installation, a layer of settable material is adapted to be applied over said rim portion to the extremity of said lip to form a surface finish over said rim which is of substantially flush appearance to the remainder of the surface member not covered by said rim (1); and,
a flange (3) depending substantially orthogonally from the outer extremity of said lip (2) so as to fit within said orifice and thereby define an inner surface of said aperture which extends substantially orthogonally to said surface finish.

2. An aperture edging member (15) as claimed in claim 1, wherein said rim (1) is shaped to fit within an orifice of any selected shape.

3. An aperture edging member (15) as claimed in claim 1 or 2, wherein said rim (1) is substantially annularly shaped so as to fit within a substantially circular orifice.

4. An aperture edging member (15) as claimed in any one of claims 1 to 3, wherein said surface member (9) is formed of plasterboard, plaster, render or the like, and said settable material includes plaster, render or other settable filler material.

5. A support member (15) for supporting a fitting (17) in an orifice provided within a surface member (9), **characterised in that** said member being formed as a unitary member of complementary shape to surround the entire periphery of an orifice formed in said surface member (9), the support member (15) including:
a substantially planar rim portion (1) which is perforated, segmented, castellated, or the like, and, which is adapted to be attached over a portion of said surface member (9) about said orifice formed in said surface member (9);
a lip (12) extending outwards from an inner edge of said rim (1) such that, following installation, a layer of settable material is applied over said rim portion to the extremity of said lip (2) to form a surface finish over said rim (1) which is of substantially flush appearance to the remainder of the surface member (9) not covered by said rim (1); and,
a flange (3) depending substantially orthogonally from the outer extremity of said lip (2) so as to fit within said orifice and thereby define an inner surface of said aperture which extends substantially orthogonally to said surface finish, said flange (3) incorporating means for attachment of said fitting (17).

6. A support member (15) as claimed in claim 5, wherein said rim (1) is shaped to fit within an orifice of any desired shape.

7. A support member (15) as claimed in claim 5 or 6, wherein said rim (1) is substantially annularly shaped to fit within a substantially circularly shaped orifice.

8. A support member (15) as claimed in any one of claims 5 to 7, wherein said surface member (9) is a plasterboard, plaster or rendered surface.

9. A support member (15) as claimed in any one of claims 5 to 8, wherein said settable material includes plaster, render or other filler material.

10. A support member (15) as claimed in any one of claims 5 to 9, wherein said fitting (17) is a light fitting, such as a downlight fitting.

11. A support member (15) as claimed in any one of claims 5 to 10, wherein said fitting (17) is an air conditioning or heating or other vent, a speaker, a sprinkler, or any other fitting normally attached to a ceiling or wall surface.

12. A support member (15) as claimed in any one of claims 5 to 11, wherein said support member (15) is formed of sheet metal material.

13. A support member (15) as claimed in any one of claims 5 to 12, wherein said support member (15) is formed of plastics material.

14. A lighting device (17) adapted to be provided within an orifice of a surface member (9), including a support member (15), **characterised in that** said support member (15) is formed as a unitary member of complementary shape to surround the entire periphery of an orifice formed in said surface member (9), said support member (15) including:
a substantially planar rim portion (1) adapted to be attached over a portion of said surface member (9) about said orifice formed in said surface member (9), the rim portion (1) being perforated, segmented, castellated or the like;
a lip (2) extending outwards from an inner edge of said rim (1), such that, following installation, a layer of settable material is provided over said rim (1) to the extremity of said lip (2) to form a surface finish over said rim (1) which is of substantially flush appearance to the remainder of the surface member (9) not covered by said rim (1), and;
a flange (3) depending substantially orthogonally from said lip (2) so as to fit substantially within said orifice and thereby define an inner surface of said aperture which extends substantially orthogonally to said surface finish;
said lighting device (17) also including lamp means (12) adapted to be releasably attached to attachment means (7) associated with said flange (3) of said support member in a manner such that said lamp means (17) either is substantially flush with or recessed within said aperture relative to said surface member so that said lamp means does not protrude from said surface member.

15. A lighting device (17) as claimed in claim 14, wherein said light fitting includes a lamp housing (4) including a flange having a central aperture to receive said lamp means (12), wherein said lamp housing (4) is provided with engagement means to engage with said attachment means (7) of said support member.

16. A method of forming an aperture in a surface member (9), including the steps of:
cutting an orifice in said surface member (9);
inserting and attaching a continuously formed aperture edging member (15) within said orifice, said aperture edging member (15) including
a substantially planar rim portion (1) which is perforated, segmented, castellated or the like, and, which is adapted to be attached over a portion of said surface member (9) about said orifice formed in said surface member (9);
a lip (2) extending outwards from an inner edge of said rim (1) such that, following installation, a layer of settable material is adapted to be applied over said rim portion (1) to the extremity of said lip (2) to form a surface finish over said rim (1) which is of substantially flush appearance to the remainder of the surface member (9) not covered by said rim (1); and,
a flange (3) depending substantially orthogonally from the outer extremity of said lip (2) so as to fit within said orifice and thereby define an inner surface of said aperture which extends substantially orthogonally to said surface finish; and,
applying a layer of settable material over said rim portion (1) to said lip (2).

17. A method of forming an aperture in a surface member (9) as claimed in claim 16, wherein said orifice is formed of any desired shape, and wherein an aperture edging member (15) of corresponding shape is inserted within said orifice.

18. A method of forming an aperture in a surface member (9) as claimed in claim 16, wherein said orifice is of substantially circular shape, and wherein an aperture edging member (15) of substantially annular shape is provided within said orifice.

19. A method of forming an aperture in a surface member as claimed in any one of claims 16 to 18, wherein said surface member (9) is plasterboard, plaster or a rendered surface, and wherein said settable material includes plaster, render or other filler material.

20. A method of installing a recessed fitting (17) in a surface member (9), including the steps of:
cutting an orifice in said surface member (9);
inserting and attaching a support member (15) in said orifice, said support member **characterised in that** it is formed as a unitary member of complementary shape to surround the entire periphery of an orifice formed in said surface member (9), the support member (15) including:
a substantially planar rim portion (1) which is perforated, segmented, castellated, or the like, and, which is adapted to be attached over a portion of said surface member (9) about said orifice formed in said surface member (9);
a lip (1) extending outwards from an inner edge of said rim (1) such that, following installation, a layer of settable material is applied over said rim portion to the extremity of said lip (1) to form a surface finish over said rim which is of substantially flush appearance to the remainder of the surface member (9) not covered by said rim; and,
a flange (3) depending substantially orthogonally from the outer extremity of said lip (2) so as to fit within said orifice and thereby define an inner surface of said aperture which extends substantially orthogonally to said surface finish, said flange incorporating means (7) for attachment of said fitting;
providing a layer of settable material over said rim (1) to said lip (2); and,
attaching said fitting (17) to said attachment means of said flange (3),

21. A method of installing a recessed fitting (17) in a surface member (9) as claimed in claim 20, wherein said orifice is formed of any desired shape, and wherein an aperture edging member of corresponding shape is inserted within said orifice.

22. A method of installing a recessed fitting (17) in a surface member (9) as claimed in claim 20, wherein said orifice is of substantially circular shape, and wherein an aperture edging member having a rim (1) of substantially annular shape is provided within said orifice.

23. A method of installing a recessed fitting (17) in a surface member (9) as claimed in any one of claims 20 to 22, wherein said surface member is plasterboard, plaster or a rendered surface, and wherein said settable material includes plaster, render or other fillable material.

24. A method of installing a.recessed fitting (17) in a surface member (9) as claimed in any one of claims 20 to 23, **characterised in that** said fitting (17) is a light fitting.

25. A method of installing a recessed fitting (17) in a surface member (9) as claimed in any one of claims 20 to 24, **characterised in that** said fitting (17) is an air conditioning, heating or other vent, a speaker, a sprinkler, or any other fitting normally installed in a ceiling or wall surface.

## Patentansprüche

1. Randbildungselement für Ausschnitte (15) zum Bilden eines im Wesentlichen flachen Ausschnitts in einem Oberflächenelement (9), **dadurch gekennzeichnet, dass** das Element (15) als ein einheitliches Element komplementärer Form ausgebildet ist, um den gesamten Umfang einer in dem Oberflächenelement (9) gebildeten Öffnung zu umgeben, wobei das Randbildungselement für Ausschnitte (15) umfasst:
einen im Wesentlichen ebenen Einfassungsabschnitt (1), der perforiert, segmentiert, verzahnt oder dergleichen ist, und der angepasst ist, um über einem Abschnitt des Oberflächenelements (9) um die in dem Oberflächenelement gebildete Öffnung herum befestigt zu sein;
eine Lippe (2), die sich nach außen von einem Innenrand der Einfassung (1) erstreckt, sodass nach der Installation eine Schicht von setzbarem Material angepasst ist, um über dem Einfassungsabschnitt zu der Extremität der Lippe auf gebracht zu werden, um einen Oberflächenfinish über der Einfassung zu bilden, der von im Wesentlichen bündiger Erscheinung zu dem Rest des durch die Einfassung (1) nicht abgedeckten Oberflächenelements ist; und
einen Flansch (3), der im Wesentlichen rechtwinklig von der äußeren Extremität der Lippe (2) abhängt, um in die Öffnung zu passen und dadurch eine Innenoberfläche des Ausschnittes zu definieren, die sich im Wesentlichen rechtwinklig zu dem Oberflächenfinish erstreckt.

2. Randbildungselement für Ausschnitte (15) gemäß Anspruch 1, bei dem die Einfassung (1) geformt ist, um in eine Öffnung irgendeiner ausgewählten Form zu passen.

3. Randbildungselement für Ausschnitte (15) gemäß Anspruch 1 oder 2, bei dem die Einfassung (1) im Wesentlichen ringförmig geformt ist, um in eine im Wesentlichen kreisförmige Öffnung zu passen.

4. Randbildungselement für Ausschnitte (15) gemäß einem der Ansprüche 1 bis 3, bei dem das Oberflächenelement (9) aus Gipskarton, Gips, Putz oder dergleichen gebildet ist, und das setzbare Material Gips, Putz oder einen anderen setzbaren Füllstoff umfasst.

5. Trägerelement (15) zum Tragen eines Einbauteils (17) in einer in einem Oberflächenelement (9) bereitgestellten Öffnung, **dadurch gekennzeichnet, dass** das Element als ein einheitliches Element von komplementärer Form ausgebildet ist, um den gesamten Umfang einer in dem Oberflächenelement (9) gebildeten Öffnung zu umgeben, wobei das Trägerelement (15) umfasst:
einen im Wesentlichen ebenen Einfassungsabschnitt (1), der perforiert, segmentiert, verzahnt oder dergleichen ist, und der angepasst ist, um über einem Abschnitt des Oberflächenelements (9) um die in dem Oberflächenelement (9) gebildete Öffnung befestigt zu sein;
eine Lippe (12), die sich nach außen von einem Innenrand der Einfassung (1) erstreckt, sodass nach der Installation eine Schicht von setzbaren Material über dem Einfassungsabschnitt zu der Extremität der Lippe (2) aufgebracht wird, um einen Oberflächenfinish über der Einfassung (1) zu bilden, der von im Wesentlichen bündiger Erscheinung zu dem Rest des Oberflächenelements (9) ist, der nicht durch die Einfassung (1) abgedeckt wird; und
einen Flansch (3), der im Wesentlichen rechtwinklig von der äußeren Extremität der Lippe (2) abhängt, um in die Öffnung zu passen und dadurch eine Innenoberfläche des Ausschnittes zu definieren, die sich im Wesentlichen rechtwinklig zu dem Oberflächenfinish erstreckt, wobei der Flansch (3) ein Mittel zur Befestigung des Einbauteils (17) beinhaltet.

6. Trägerelement (15) gemäß Anspruch 5, bei dem die Einfassung (1) geformt ist, um in eine Öffnung irgendeiner gewünschten Form zu passen.

7. Trägerelement (15) gemäß Anspruch 5 oder 6, bei dem die Einfassung (1) im Wesentlichen ringförmig geformt ist, um in eine im Wesentlichen kreisförmig geformte Öffnung zu passen.

8. Trägerelement (15) gemäß einem der Ansprüche 5 bis 7, bei dem das Oberflächenelement (9) eine Gipskarton-, Gips- oder verputzte Oberfläche ist.

9. Trägerelement (15) gemäß einem der Ansprüche 5 bis 8, bei dem das setzbare Material Gips, Putz oder einen anderen Füllstoff umfasst.

10. Trägerelement (15) gemäß einem der Ansprüche 5 bis 9, bei dem das Einbauteil (17) ein Beleuchtungseinbauteil, wie beispielsweise ein Punktstrahleinbauteil, ist.

11. Trägerelement (15) gemäß einem der Ansprüche 5 bis 10, bei dem das Einbauteil (17) eine Klimaanlagen- oder Heiz- oder andere Lüftungsöffnung ist, ein Lautsprecher, ein Sprinkler oder irgendein anderes Einbauteil ist, das normalerweise an einer Decke oder Wandoberfläche befestigt ist.

12. Trägerelement (15) gemäß einem der Ansprüche 5 bis 11, bei dem das Trägerelement (15) aus Blechmaterial gebildet ist.

13. Trägerelement (15) gemäß einem der Ansprüche 5 bis 12, bei dem das Trägerelement (15) aus Kunststoffinaterial gebildet ist.

14. Beleuchtungsvornchtung (17), die angepasst ist, um in einer Öffnung eines Oberflächenelements (9) bereitgestellt zu werden, die ein Trägerelement (15) aufweist, **dadurch gekennzeichnet, dass** das Trägerelement (15) als ein einheitliches Element von komplementärer Form ausgebildet ist, um den gesamten Umfang einer in dem Oberflächenelement (9) gebildeten Öffnung zu umgeben, wobei das Trägerelement (15) umfasst:
einen im Wesentlichen ebenen Einfassungsabschnitt (1), der angepasst ist, um über einem Abschnitt des Oberflächenelements (9) um die in dem Oberflächenelement (9) gebildeten Öffnung herum befestigt zu sein, wobei der Einfassungsabschnitt (1) perforiert, segmentiert, verzahnt oder dergleichen ist;
eine Lippe (2), die sich nach außen von einem Innenrand der Einfassung (1) erstreckt, sodass nach der Installation eine Schicht von setzbarem Material über der Einfassung (1) zu der Extremität der Lippe (2) bereitgestellt wird, um einen Oberflächenfinish über der Einfassung (1) zu bilden, der von im Wesentlichen bündiger Erscheinung zu dem Rest des Oberflächenelements (9) ist, der nicht durch die Einfassung (1) abgedeckt ist, und;
einen Flansch (3), der im Wesentlichen rechtwinklig von der Lippe (2) abhängt, um im Wesentlichen in die Öffnung zu passen und dadurch eine Innenoberfläche des Ausschnittes zu definieren, die sich im Wesentlichen rechtwinklig zu dem Oberflächenfinish erstreckt;
wobei die Beleuchtungsvorrichtung (17) ebenfalls ein Lampenmittel (12) umfasst, das angepasst ist, um abnehmbar an einem Befestigungsmittel (7) befestigt zu sein, das dem Flansch (3) des Trägerelements auf eine solche Art und Weise zugeordnet ist, dass das Lampenmittel (17) entweder im Wesentlichen bündig mit oder eingelassen innerhalb des Ausschnittes bezogen auf das Oberflächenelement ist, sodass das Lampenmittel nicht von dem Oberflächenelement hervorsteht.

15. Beleuchtungsvorrichtung (17) gemäß Anspruch 14, bei der das Beleuchtungseinbauteil ein Lampengehäuse (4) mit einem Flansch umfasst, der einen zentralen Ausschnitt aufweist, um das Lampenmittel (12) aufzunehmen, wobei das Lampengehäuse (4) mit meingriffmitteln ausgestattet ist, um das Befestigungsmittel (7) des Trägerelements in Eingriff zu nehmen.

16. Verfahren zum Bilden eines Ausschnittes in einem Oberflächenelement (9), mit den folgenden Schritten:
Schneiden einer Öffnung in dem Oberflächenelement (9);
Einfügen und Befestigen eines kontinuierlich ausgebildeten Randbildungselements für Ausschnitte (15) in der Öffnung, wobei das Randbildungselement für Ausschnitte (15) umfasst:
einen im Wesentlichen ebenen Einfassungsabschnitt (1), der perforiert, segmentiert, verzahnt oder dergleichen ist, und der angepasst ist, um über einem Abschnitt des Oberflächenelements (9) um die in dem Oberflächenelement gebildete Öffnung herum befestigt zu werden;
eine Lippe (2), die sich nach außen von einem Innenrand der Einfassung (1) erstreckt, sodass nach der Installation einer Schicht von setzbarem Material angepasst ist, um über dem Einfassungsabschnitt (1) zu der Extremität der Lippe (2) aufgebracht zu werden, um einen Oberflächenfinish über der Einfassung (1) zu bilden, der von im Wesentlichen bündiger Erscheinung zu dem Rest des Oberflächenelements (9) ist, der nicht durch die Einfassung (1) abgedeckt ist; und
einen Flansch (3), der im Wesentlichen rechtwinklig von der äußeren Extremität der Lippe (2) abhängt, um in die Öffnung zu passen und dadurch eine Innenoberfläche des Ausschnittes zu definieren, die sich im Wesentlichen rechtwinklig zu dem Oberflächenfinish erstreckt; und
Aufbringen einer Schicht von setzbaren Material über dem Einfassungsabschnitt (1) zu der Lippe (2).

17. Verfahren zum Bilden eines Ausschnittes in einem Oberflächenelement (9) gemäß Anspruch 16, bei dem die Öffnung von irgendeiner gewünschten Form gebildet und wobei ein Randbildungselement für Ausschnitte (15) von entsprechender Form in die Öffnung eingefügt wird.

18. Verfahren zum Bilden eines Ausschnittes in einem Oberflächenelement (9) gemäß Anspruch 16, bei dem die Öffnung von im Wesentlichen kreisförmiger Form ist, und wobei ein Randbildungselement für Ausschnitte (15) von im Wesentlichen ringförmiger Form in der Öffnung bereitgestellt wird.

19. Verfahren zum Bilden eines Ausschnittes in einem Oberflächenelement gemäß einem der Ansprüche 16 bis 18, bei dem das Oberflächenelement (9) Gipskarton, Gips oder eine verputzte Oberfläche ist, und wobei das setzbare Material Gips, Putz oder einen anderen Füllstoff umfasst.

20. Verfahren zum Installieren eines ausgenommenen Einbauteils (17) in einem Oberflächenelement (9), mit den folgenden Schritten:
Schneiden einer Öffnung in dem Oberflächenelement (9);
Einfügen und Befestigen eines Trägerelements (15) in der Öffnung, wobei das Trägerelement **dadurch gekennzeichnet ist**, das es als ein einheitliches Element komplementärer Form ausgebildet ist, um den gesamten Umfang einer in dem Oberflächenelement (9) gebildeten Öffnung zu umgeben, wobei das Trägerelement (15) umfasst:
einen im Wesentlichen ebenen Einfassungsabschnitt (1), der perforiert, segmentiert, verzahnt oder dergleichen ist, und der angepasst ist, um über einem Abschnitt des Oberflächenelements (9) um die in dem Oberflächenelement (9) gebildete Öffnung befestigt zu sein;
eine Lippe (1), die sich nach außen von einem Innenrand der Einfassung erstreckt, sodass nach der Installation einer Schicht von setzbarem Material über dem Einfassungsabschnitt zu der Extremität der Lippe (1) aufgebracht wird, um einen Oberflächenfinish über der Einfassung (1) zu bilden, der von im Wesentlichen windiger Erscheinung zu dem Rest des durch die Einfassung nicht abgedeckten Oberflächenelements (9) ist; und
einen Flansch (3), der im Wesentlichen rechtwinklig von der äußeren Extremität der Lippe (2) abhängt, um in die Öffnung zu passen und dadurch eine Innenoberfläche des Ausschnittes zu definieren, die sich im Wesentlichen rechtwinklig zu dem Oberflächenfinish erstreckt, wobei der Flansch ein Mittel (7) zur Befestigung des Einbauteils beinhaltet;
Bereitstellen einer Schicht aus setzbarem Material über der Einfassung (1) zu der Lippe (2); und
Befestigen des Einbauteils (17) an dem Befestigungsmittel des Flansches (3).

21. Verfahren zum Installieren eines eingelassenen Einbauteils (17) in einem Oberflächenelement (9) gemäß Anspruch 20, bei dem die Öffnung von irgendeiner gewünschten Form gebildet und wobei ein Randbildungselement für Ausschnitte von entsprechender Form in die Öffnung eingefügt wird.

22. Verfahren zum Installieren eines ausgenommenen Einbauteils (17) in einem Oberflächenelement (9) gemäß Anspruch 20, bei dem die Öffnung von im Wesentlichen kreisförmiger Form ist, und wobei ein Randbildungselement für Ausschnitte mit einer Einfassung (1) von im Wesentlichen ringförmiger Form in der Öffnung bereitgestellt wird.

23. Verfahren zum Installieren eines ausgenommenen Einbauteils (17) in einem Oberflächenelement (9) gemäß einem der Ansprüche 20 bis 22, wobei das Oberflächenelement Gipskarton, Gips oder eine verputzte Oberfläche ist, und wobei das setzbare Material Gips, Putz oder ein anderes füllbares Material umfasst.

24. Verfahren zum Installieren eines ausgenommenen Einbauteils (17) in einem Oberflächenelement (9) gemäß einem der Ansprüche 20 bis 23, **dadurch gekennzeichnet, dass** das Einbauteil (17) ein Beleuchtungseinbauteil ist.

25. Verfahren zum Installieren eines ausgenommenen Einbauteils (17) in ein Oberflächenelement (9) gemäß einem der Ansprüche 20 bis 24, **dadurch gekennzeichnet, dass** das Einbauteil (17) eine Klimaanlagen-, Heiz- oder andere Lüftungsöffnung, ein Lautsprecher, Sprinkler oder irgendein ein anderes Einbauteil ist, das normalerweise in einer Wand oder Wandoberfläche installiert ist.

## Revendications

1. Organe de bordure d'ouverture (15) pour former une ouverture sensiblement lisse à l'intérieur d'un organe de surface (9), **caractérisé en ce que** ledit organe (15) étant formé comme un organe unitaire d'une forme complémentaire pour entourer toute la périphérie d'un orifice formé dans ledit organe de surface (9), l'organe de bordure d'ouverture (15) incluant :
une partie de bord sensiblement plane (1) qui est perforée, segmentée, crénelée, ou analogue, et qui est adaptée pour être attachée sur une partie dudit organe de surface (9) autour dudit orifice formé dans ledit organe de surface ;
une lèvre (2) s'étendant vers l'extérieur depuis un bord interne dudit bord (1) de telle sorte que, suivant l'installation, une couche d'un matériau qui peut être posé, est adaptée pour être appliquée sur ladite partie de bord jusqu'à l'extrémité de ladite lèvre pour former un fini de surface sur ledit bord qui est d'un aspect sensiblement à niveau avec le reste de l'organe de surface non recouvert par ledit bord (1) ; et
un rebord (3) dépendant sensiblement orthogonalement de l'extrémité externe de ladite lèvre (2) de sorte à entrer à l'intérieur dudit orifice et, de ce fait, à définir une surface interne de ladite ouverture qui s'étend sensiblement de façon orthogonale au dit fini de surface.

2. Organe de bordure d'ouverture (15) comme revendiqué dans la revendication 1, dans lequel ledit bord (1) est formé pour entrer à l'intérieur d'un orifice de n'importe quelle forme choisie.

3. Organe de bordure d'ouverture (15) comme revendiqué dans la revendication 1 ou 2, dans lequel ledit bord (1) est formé sensiblement de façon annulaire de sorte à entrer à l'intérieur d'un orifice sensiblement circulaire.

4. Organe de bordure d'ouverture (15) comme revendiqué dans l'une quelconque des revendication 1 à 3, dans lequel ledit organe de surface (9) est formé en Placoplâtre, en plâtre, en crépi ou analogue et ledit matériau qui peut être posé inclut le plâtre, le crépi ou tout autre matériau de remplissage qui peut être posé.

5. Organe de support (15) pour supporter un accessoire (17) dans un orifice prévu à l'intérieur d'un organe de surface (9), **caractérisé en ce que** ledit organe étant formé comme un organe unitaire d'une forme complémentaire pour entourer toute la périphérie d'un orifice formé dans ledit organe de surface (9), l'organe de support (15) incluant :
une partie de bord sensiblement plane (1) qui est perforée, segmentée, crénelée, ou analogue, et qui est adaptée pour être attachée sur une partie dudit organe de surface (9) autour dudit orifice formé dans ledit organe de surface (9) ;
une lèvre (2) s'étendant vers l'extérieur depuis un bord interne dudit bord (1) de telle sorte que, suivant l'installation, une couche d'un matériau qui peut être posé, est appliquée sur ladite partie de bord jusqu'à l'extrémité de ladite lèvre (2) pour former un fini de surface sur ledit bord (1) qui est d'un aspect sensiblement à niveau avec le reste de l'organe de surface (9) non recouvert par ledit bord (1) ; et
un rebord (3) dépendant sensiblement orthogonalement de l'extrémité externe de ladite lèvre (2) de sorte à entrer à l'intérieur dudit orifice et, de ce fait, à définir une surface interne de ladite ouverture qui s'étend sensiblement de façon orthogonale au dit fini de surface, ledit rebord (3) incorporant un moyen pour la fixation dudit accessoire (17).

6. Organe de support (15) comme revendiqué dans la revendication 5, dans lequel ledit bord (1) est formé pour entrer à l'intérieur d'un orifice de n'importe quelle forme souhaitée.

7. Organe de support (15) comme revendiqué dans la revendication 5 ou 6, dans lequel ledit bord (1) est formé sensiblement de façon annulaire de sorte à entrer à l'intérieur d'un orifice de forme sensiblement circulaire.

8. Organe de support (15) comme revendiqué dans l'une quelconque des revendication 5 à 7, dans lequel ledit organe de surface (9) est une surface en Placoplâtre, en plâtre ou enduite de crépi.

9. Organe de support (15) comme revendiqué dans l'une quelconque des revendication 5 à 8, dans lequel ledit matériau qui peut être posé inclut le plâtre, le crépi ou tout autre matériau de remplissage.

10. Organe de support (15) comme revendiqué dans l'une quelconque des revendications 5 à 9, dans lequel ledit accessoire (17) est un accessoire de lampe, tel qu'un accessoire de lampe dirigé vers le bas.

11. Organe de support (15) comme revendiqué dans l'une quelconque des revendications 5 à 10, dans lequel ledit accessoire (17) est un conditionnement d'air, un chauffage ou un autre tuyau, un haut-parleur, un sprinkler ou tout autre accessoire normalement attaché à une surface de plafond ou de paroi.

12. Organe de support (15) comme revendiqué dans l'une quelconque des revendications 5 à 11, dans lequel ledit organe de support (15) est formé d'un matériau en tôle.

13. Organe de support (15) comme revendiqué dans l'une quelconque des revendications 5 à 12, dans lequel ledit organe de support (15) est formé d'un matériau en plastique.

14. Dispositif d'éclairage (17) adapté pour être prévu à l'intérieur d'un orifice d'un organe de surface (9), incluant un organe de support (15), **caractérisé en ce que** ledit organe de support (15) est formé comme un organe unitaire d'une forme complémentaire pour entourer toute la périphérie d'un orifice formé dans ledit organe de surface (9), ledit organe de support (15) incluant :
une partie de bord sensiblement plane (1) adaptée pour être attachée sur une partie dudit organe de surface (9) autour dudit orifice formé dans ledit organe de surface (9), la partie de bord (1) étant perforée, segmentée, crénelée, ou analogue ;
une lèvre (2) s'étendant vers l'extérieur depuis un bord interne dudit bord (1) de telle sorte que, suivant l'installation, une couche d'un matériau qui peut être posé, est prévue sur ledit bord (1) jusqu'à l'extrémité de ladite lèvre (2) pour former un fini de surface sur ledit bord (1) qui est d'un aspect sensiblement à niveau avec le reste de l'organe de surface (9) non recouvert par ledit bord (1) ; et ;
un rebord (3) dépendant sensiblement orthogonalement de ladite lèvre (2) de sorte à entrer en grande partie à l'intérieur dudit orifice et, de ce fait, à définir une surface interne de ladite ouverture qui s'étend sensiblement de façon orthogonale au dit fini de surface ;
ledit dispositif d'éclairage (17) incluant également un moyen lumineux (12) adapté pour être attaché de manière à pouvoir être libéré à un moyen de fixation (7) associé au dit rebord (3) dudit organe de support d'une manière telle que ledit moyen lumineux (17) est soit sensiblement à niveau avec, soit encastré à l'intérieur de ladite ouverture par rapport au dit organe de surface de telle sorte que le moyen lumineux ne fait pas saillie dudit organe de surface.

15. Dispositif d'éclairage (17) comme revendiqué dans la revendication 14, dans lequel ledit accessoire de lampe inclut un carter de lampe (4) incluant un rebord ayant une ouverture centrale pour recevoir ledit moyen lumineux (12), dans lequel ledit carter de lampe (4) est pourvu d'un moyen de mise en prise pour être en prise avec ledit moyen de fixation (7) dudit organe de support.

16. Procédé consistant à former une ouverture dans un organe de support (9), incluant les étapes consistant à :
percer un orifice dans ledit organe de surface (9) ;
insérer et attacher un organe de bordure d'ouverture formé de manière continue (15) à l'intérieur dudit orifice, ledit organe de bordure d'ouverture (15) incluant :
une partie de bord sensiblement plane (1) qui est perforée, segmentée, crénelée, ou analogue, et qui est adaptée pour être attachée sur une partie dudit organe de surface (9) autour dudit orifice formé dans ledit organe de surface (9) ;
une lèvre (2) s'étendant vers l'extérieur depuis un bord interne dudit bord (1) de telle sorte que, suivant l'installation, une couche d'un matériau qui peut être posé, est adaptée pour être appliquée sur ladite partie de bord (1) jusqu'à l'extrémité de ladite lèvre (2) pour former un fini de surface sur ledit bord (1) qui est d'un aspect sensiblement à niveau avec le reste de l'organe de surface (9) non recouvert par ledit bord (1) ; et
un rebord (3) dépendant sensiblement orthogonalement de l'extrémité externe de ladite lèvre (2) de sorte à entrer à l'intérieur dudit orifice et, de ce fait, à définir une surface interne de ladite ouverture qui s'étend sensiblement de façon orthogonale au dit fini de surface.
appliquer une couche d'un matériau qui peut être posé sur ladite partie de bord (1) jusqu'à ladite lèvre (2).

17. Procédé consistant à former une ouverture dans un organe de surface (9) comme revendiqué dans la revendication 16, dans lequel ledit orifice est formé selon n'importe quelle forme souhaitée et dans lequel un organe de bordure d'ouverture (15) d'une forme correspondante est inséré à l'intérieur dudit orifice.

18. Procédé consistant à former une ouverture dans un organe de surface (9) comme revendiqué dans la revendication 16, dans lequel ledit orifice est d'une forme sensiblement circulaire et dans lequel un organe de bordure d'ouverture (15) d'une forme sensiblement annulaire est prévu à l'intérieur dudit orifice.

19. Procédé consistant à former une ouverture dans un organe de surface comme revendiqué dans l'une quelconque des revendications 16 à 18, dans lequel ledit organe de surface (9) est du Placoplâtre, du plâtre ou est une surface enduite de crépi et dans lequel ledit matériau qui peut être posé inclut du plâtre, du crépi ou tout autre matériau de remplissage.

20. Procédé consistant à installer un accessoire encastré (17) dans un organe de support (9), incluant les étapes consistant à :
percer un orifice dans ledit organe de surface (9) ;
insérer et attacher un organe de support (15) dans ledit orifice, ledit organe de support (15) **caractérisé en ce qu'**il est formé comme un organe unitaire d'une forme complémentaire pour entourer toute la périphérie d'un orifice formé dans ledit organe de surface (9), l'organe de support (15) incluant :
une partie de bord sensiblement plane (1) qui est perforée, segmentée, crénelée, ou analogue, et qui est adaptée pour être attachée sur une partie dudit organe de surface (9) autour dudit orifice formé dans ledit organe de surface (9) ;
une lèvre (2) s'étendant vers l'extérieur depuis un bord interne dudit bord (1) de telle sorte que, suivant l'installation, une couche d'un matériau qui peut être posé, est appliquée sur ladite partie de bord jusqu'à l'extrémité de ladite lèvre (2) pour former un fini de surface sur ledit bord (1) qui est d'un aspect sensiblement à niveau avec le reste de l'organe de surface (9) non recouvert par ledit bord ; et
un rebord (3) dépendant sensiblement orthogonalement de l'extrémité externe de ladite lèvre (2) de sorte à entrer à l'intérieur dudit orifice et, de ce fait, à définir une surface interne de ladite ouverture qui s'étend sensiblement de façon orthogonale au dit fini de surface, ledit rebord incorporant un moyen (7) pour la fixation dudit accessoire ;
prévoir une couche du matériau qui peut être posé sur ledit rebord (1) jusqu' à ladite lèvre (2); et
fixer ledit accessoire (17) au dit moyen de fixation dudit rebord (3).

21. Procédé consistant à installer un accessoire encastré (17) dans un organe de surface (9) comme revendiqué dans la revendication 20, dans lequel ledit orifice est formé selon n'importe quelle forme souhaitée et dans lequel un organe de bordure d'ouverture d'une forme correspondante est inséré à l'intérieur dudit orifice.

22. Procédé consistant à installer un accessoire encastré (17) dans un organe de surface (9) comme revendiqué dans la revendication 20, dans lequel ledit orifice est d'une forme sensiblement circulaire et dans lequel un organe de bordure d'ouverture ayant un bord (1) d'une forme sensiblement annulaire est prévu à l'intérieur dudit orifice.

23. Procédé consistant à installer un accessoire encastré (17) dans un organe de surface (9) comme revendiqué dans l'une quelconque des revendications 20 à 22, dans lequel ledit organe de surface est du Placoplâtre, du plâtre ou est une surface enduite de crépi et dans lequel ledit matériau qui peut être posé inclut du plâtre, du crépi ou tout autre matériau de remplissage.

24. Procédé consistant à installer un accessoire encastré (17) dans un organe de surface (9) comme revendiqué dans l'une quelconque des revendications 20 à 23, **caractérisé en ce que** ledit accessoire (17) est un accessoire de lampe.

25. Procédé consistant à installer un accessoire encastré (17) dans un organe de surface (9) comme revendiqué dans l'une quelconque des revendications 20 à 24, **caractérisé en ce que** ledit accessoire (17) est un conditionnement d'air, un chauffage ou un autre tuyau, un haut-parleur, un sprinkler ou tout autre accessoire normalement installé à une surface de plafond ou de paroi.
